# EUROPEAN PATENT SPECIFICATION

(11) **EP 3 195 101 B1**
(45) Date of publication and mention of the grant of the patent: **10.06.2020**
(21) Application number: 15771832.1
(22) Date of filing: 14.09.2015
(51) Int. Cl.: G06F 3/0488, G06F 3/16

(54) **GESTURE SHORTCUTS FOR INVOCATION OF VOICE INPUT**
GESTENABKÜRZUNGEN ZUM AUFRUFEN VON SPRACHEINGABE
RACCOURCIS GESTUEL POUR APPEL D'ENTRÉE VOCALE

(30) Priority: 15.09.2014 US 201414486788
(43) Date of publication of application: 26.07.2017
(73) Proprietor: Microsoft Technology Licensing, LLC, Redmond, WA 98052-6399 (US)
(72) Inventor: DISANO, Robert Joseph, Redmond, Washington 98052-6399 (US); PEREIRA, Alexandre Douglas, Redmond, Washington 98052-6399 (US); STIFELMAN, Lisa Joy, Redmond, Washington 98052-6399 (US); MARKIEWICZ, Jan-Kristian, Redmond, Washington 98052-6399 (US); LANDRY, Shane Jeremy, Redmond, Washington 98052-6399 (US); KLEIN, Christian, Redmond, Washington 98052-6399 (US)
(74) Representative: Goddar, Heinz J.
(86) International application number: PCT/US2015/049870
(87) International publication number: WO 2016/044108

(56) References cited:
- US-A1- 2010 245 242
- US-A1- 2012 169 624
- US-A1- 2012 216 134
- US-A1- 2012 260 176

## Description

### BACKGROUND OF THE INVENTION

Gesture shortcuts implemented in touchscreen computing devices facilitate user experience by providing on-demand controls associated with desired events, circumventing the traditional static input methods (i.e., a keyboard key or designated button for receiving control inputs. Although existing implementations of gesture shortcuts may assist a user with on-demand input controls, the inputs themselves are generally limited to information retrieved directly from the gesture itself (i.e., swipe up means scroll up, swipe down means scroll down). Certain applications have attempted to provide additional on-demand input controls by including voice-to-text recognition services. Users, however, are currently limited in invoking such services using traditional static controllers or, in some cases, operating with a resource-consuming always-on listening mode (i.e., via accessibility tools). Additionally, these voice-to-text recognition services are only available in applications that provide such services.

US 2012/0260176 A1 discloses a graphical user interface having a voice input mode. In the user interface, a user initially selects an input field on a touchscreen by performing a long-press at a location near the input field, and speaks a phrase to input into the input field. Then, an audio conversion module receives audio data corresponding to the inputted phrase from microphone. After providing the spoken input, the user removes his/her finger from the touchscreen. In response to the finger being removed, the audio conversion module converts the audio data to text data, and inserts the text data into the input field.

US 2012/0216134 A1 discloses a multi-modal user interface that hides response latency delays. A graphical user interface (GUI) supports different user input modalities including low delay inputs which respond to user inputs without significant delay, and high latency inputs which have a significant response latency after receiving a user input before providing a corresponding completed response. The GUI accepts user inputs in a sequence of mixed input modalities independently of response latencies without waiting for responses to high latency inputs, and responds to each user input in the sequence as if each preceding user input in the sequence had been performed without response latencies.

US 2010/0245242 A1 discloses a method of operating a screen. According to the method, a first sensing signal is generated when a designator controls a pointer on the non-display area. Then, a second sensing signal is generated when the pointer is moved from the non-display area to the display area. Then, a third sensing signal is generated when the pointer is moved on the display area. Last, a user interface is opened in the display area when a processing module receives the first, second and third sensing signals sequentially.

US 2012/0169624 A1 relates to determining an intent of a user to initiate an action on an interactive display system. For example, one disclosed embodiment provides a method of initiating an action on an interactive display device, the interactive display device including a touch-sensitive display. In this example, the method comprises displaying an initiation control at a launch region of the display, receiving an initiation input via the initiation control, displaying a confirmation target in a confirmation region of the display in response to receiving the initiation input, receiving a confirmation input via the confirmation target, and performing an action responsive to the confirmation input.

### SUMMARY OF THE INVENTION

The invention is defined by the subject matter of the independent claims. Advantageous embodiments are subject to the dependent claims. Embodiments not falling under the scope of one of the independent claims are to be considered examples useful for understanding the invention.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In various embodiments, systems, methods, and computer storage media are provided for initiating a system-based voice-to-text dictation service in response to a gesture shortcut trigger. Data input fields, independent of the application, are presented anywhere throughout the system and are configured to at least detect one or more input events. A gesture listener process is operational and configured to detect preconfigured gestures corresponding to one of the data input fields. The gesture listener process can operably invoke a voice-to-text session upon detecting a preconfigured gesture and generating an input event based on the preconfigured gesture. The preconfigured gesture can be configured to omit any sort of visible on-screen affordance (e.g., microphone button on a virtual keyboard) to maintain aesthetic purity and further provide system-wide access to the voice-to-text session.

### BRIEF DESCRIPTION OF THE DRAWING

The present invention is illustrated by way of example and not limitation in the accompanying figures in which like reference numerals indicate similar elements and in which:
FIG. 1 is a block diagram of an exemplary computing environment suitable for use in implementing embodiments of the present invention;
FIG. 2 schematically shows a system diagram suitable for performing embodiments of the present invention;
FIGS. 3A-3D are stages of an exemplary preconfigured gesture for starting a voice-to-text session, particularly illustrating the swipe in data input field sequence with a transient on-screen affordance;
FIG. 4 is an exemplary preconfigured gesture for starting a voice-to-text session, similar to that of FIGS. 3A-3D, particularly illustrating the swipe in data input field sequence with a fixed on-screen affordance;
FIG. 5 is an exemplary preconfigured gesture for starting a voice-to-text session, particularly illustrating the swipe from bezel sequence with focus in a data input field;
FIGS. 6A-6C are stages of an exemplary preconfigured gesture for starting the voice-to-text session, particularly illustrating the double tap in data input field sequence;
FIGS. 7A-7C are stages of an exemplary preconfigured gesture for starting the voice-to-text session, particularly illustrating the push and hold and the "push-to-talk" sequence;
FIGS. 8A-8C are stages of an exemplary preconfigured gesture for starting the voice-to-text session, particularly illustrating the hover over data input field sequence;
FIGS. 9A-9B are stages of an exemplary preconfigured gesture for starting the voice-to-text session, particularly illustrating the hover over selected data in data input field sequence; and
FIG. 10 is a flow diagram showing an exemplary method for initiating a system-based voice-to-text dictation service in response to a gesture shortcut trigger.

### DETAILED DESCRIPTION OF THE INVENTION

The subject matter of the present invention is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

Some software applications may provide on-screen affordances (e.g., a microphone button on a virtual keyboard) for providing a user with a control for invoking a voice dictation service (i.e., voice-to-text). Oftentimes, however, on-screen affordances are not always readily visible in a particular application or even available for invocation on a system-wide level (i.e., any application across the entire platform). For example, unless a data input field, such as a text input box, is selected for data input, the keyboard including the on-screen affordance would not be readily available for easy invocation of the dictation service. Furthermore, if a particular application is not configured to provide a dictation service, data input would ultimately need to be performed manually by the user. Most applications, unless specifically designed to provide a dictation service, may not have access to a system level dictation service for voice-based data input.

Various aspects of the technology described herein are generally directed to systems, devices, methods, and computer-readable storage media for initiating a system-based voice-to-text dictation service in response to a gesture shortcut trigger (also referred to herein as a "preconfigured gesture"). A gesture listener process, configured to recognize or detect a preconfigured gesture for invoking a voice-to-text session, is generally active while any available data input field is on-screen and/or available for input. In some embodiments, the gesture listener process is continuously running, independent of the application, and throughout the entire computing system. The preconfigured gesture may be configured to omit any sort of visible on-screen affordance (e.g., microphone button on a virtual keyboard) to maintain aesthetic purity and further provide system-wide access to the dictation service. The system-wide accessibility and usability of a dictation service broadens the availability of input methods and further optimizes user experience.

Accordingly, one embodiment of the present invention is directed to one or more computer storage media storing computer-useable instructions that, when used by one or more computing devices, cause the one or more computing devices to perform operations for initiating a system-wide voice-to-text dictation service in response to a preconfigured gesture. The operations include presenting an instance of a data input field configured to at least detect one or more input events. A preconfigured gesture corresponding to the data input field is detected, the detection being performed system-wide. An input event based on the preconfigured gesture corresponding to the data input field is generated. The input event is configured to invoke a voice-to-text session for the data input field.

Another embodiment of the present invention is directed to a computer-implemented method for initiating a system-wide voice-to-text dictation service in response to a preconfigured gesture. A data input field, or an instance thereof, is presented on a display and is configured to at least detect one or more input events. A processor detects, on a system-wide level, a preconfigured gesture corresponding to the data input field. An input event is generated based on the preconfigured gesture corresponding to the data input field. The input event is configured to invoke a voice-to-text session for the data input field. The preconfigured gesture includes a physical interaction between a user and a computing device. The interaction begins within a gesture initiating region and ends within a gesture terminating region. In some embodiments, the gesture initiating and terminating regions can be common or partially common. The voice-to-text session is invoked upon at least recognition of the interaction. In some embodiments, the gesture initiating region does not include an on-screen affordance related to the voice-to-text session. On-screen affordances are generally known in the art of dictation services as user interface controls for initiating voice-to-text sessions.

Yet another embodiment of the present invention includes a device for initiating a system-wide voice-to-text dictation service in response to a preconfigured gesture. The device includes one or more processors, and one or more computer storage media storing computer-useable instructions. When used by the one or more processors, the instructions cause the one or more processors to detect a preconfigured gesture corresponding to a data input field and operable to invoke a voice-to-text session for the data input field. The preconfigured gesture includes a gesture initiating region and a gesture terminating region. The gesture initiating region does not include an on-screen affordance related to the voice-to-text session, and the gesture terminating region is located between a first end and second end of the data input field. The voice-to-text session is invoked upon at least detecting the preconfigured gesture. The voice-to-text session is aborted upon the occurrence of a timeout event, a user's interaction with a transient on-screen affordance, a keystroke performed on an actual or virtual keyboard, a removal of focus away from the active data input field, a voice command, or the user completing or terminating performance of the preconfigured gesture.

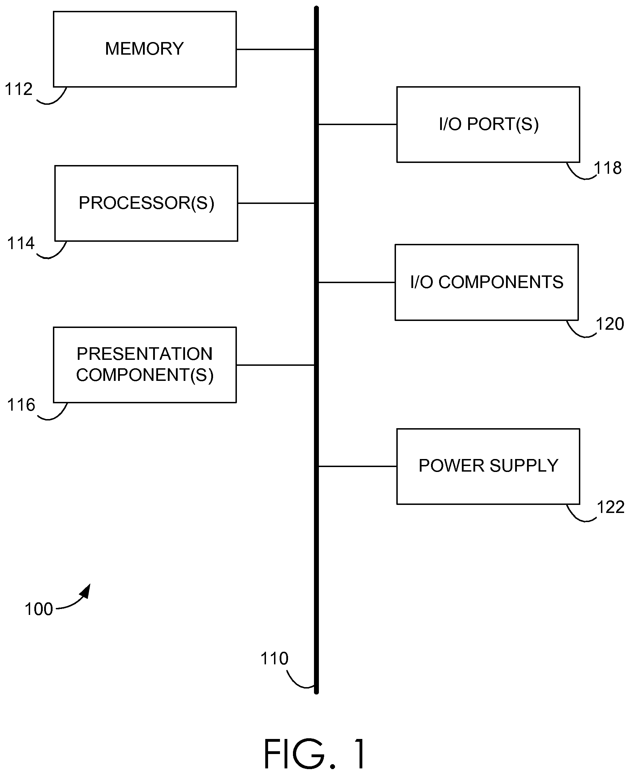

Having briefly described an overview of embodiments of the present invention, an exemplary operating environment in which embodiments of the present invention may be implemented is described below in order to provide a general context for various aspects of the present invention. Referring to the figures in general and initially to FIG. 1 in particular, an exemplary operating environment for implementing embodiments of the present invention is shown and designated generally as computing device 100. The computing device 100 is but one example of a suitable computing environment and is not intended to suggest any limitation as to the scope of use or functionality of embodiments of the invention. Neither should the computing device 100 be interpreted as having any dependency or requirement relating to any one component nor any combination of components illustrated.

Embodiments of the invention may be described in the general context of computer code or machine-useable instructions, including computer-useable or computer-executable instructions such as program modules, being executed by a computer or other machine, such as a personal data assistant or other handheld device. Generally, program modules include routines, programs, objects, components, data structures, and the like, and/or refer to code that performs particular tasks or implements particular abstract data types. Embodiments of the invention may be practiced in a variety of system configurations, including hand-held devices, consumer electronics, general-purpose computers, more specialty computing devices, and the like. Embodiments of the invention may also be practiced in distributed computing environments where tasks are performed by remote-processing devices that are linked through a communications network.

With continued reference to FIG. 1, the computing device 100 includes a bus 110 that directly or indirectly couples the following devices: a memory 112, one or more processors 114, one or more presentation components 116, one or more input/output (I/O) ports 118, one or more I/O components 120, and an illustrative power supply 122. The bus 110 represents what may be one or more busses (such as an address bus, data bus, or combination thereof). Although the various blocks of FIG. 1 are shown with lines for the sake of clarity, in reality, these blocks represent logical, not necessarily actual, components. For example, one may consider a presentation component such as a display device to be an I/O component. Also, processors have memory. The inventors hereof recognize that such is the nature of the art, and reiterate that the diagram of FIG. 1 is merely illustrative of an exemplary computing device that can be used in connection with one or more embodiments of the present invention. Distinction is not made between such categories as "workstation," "server," "laptop," "hand-held device," etc., as all are contemplated within the scope of FIG. 1 and reference to "computing device."

The computing device 100 typically includes a variety of computer-readable media. Computer-readable media may be any available media that is accessible by the computing device 100 and includes both volatile and nonvolatile media, removable and non-removable media. Computer-readable media comprises computer storage media and communication media; computer storage media excluding signals per se. Computer storage media includes volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 100.

Communication media, on the other hand, embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

The memory 112 includes computer-storage media in the form of volatile and/or nonvolatile memory. The memory may be removable, non-removable, or a combination thereof. Exemplary hardware devices include solid-state memory, hard drives, optical-disc drives, and the like. The computing device 100 includes one or more processors that read data from various entities such as the memory 112 or the I/O components 120. The presentation component(s) 116 present data indications to a user or other device. Exemplary presentation components include a display device, speaker, printing component, vibrating component, and the like.

The I/O ports 118 allow the computing device 100 to be logically coupled to other devices including the I/O components 120, some of which may be built in. Illustrative I/O components include a microphone, joystick, game pad, satellite dish, scanner, printer, wireless device, a controller, such as a stylus, a keyboard and a mouse, a natural user interface (NUI), and the like.

A NUI processes air gestures (*i.e.*, motion or movements associated with a user's hand or hands or other parts of the user's body), voice, or other physiological inputs generated by a user. A NUI implements any combination of speech recognition, touch and stylus recognition, facial recognition, biometric recognition, gesture recognition both on screen and adjacent to the screen, air gestures, head and eye tracking, and touch recognition associated with displays on the computing device 100. The computing device 100 may be equipped with one or more touch digitizers and/or depth cameras, such as, stereoscopic camera systems, infrared camera systems, RGB camera systems, and combinations of these for direct and/or hover gesture detection and recognition. Additionally, the computing device 100 may be equipped with accelerometers or gyroscopes that enable detection of motion. The output of the accelerometers or gyroscopes is provided to the display of the computing device 100 to render immersive augmented reality or virtual reality.

Aspects of the subject matter described herein may be described in the general context of computer-executable instructions, such as program modules, being executed by a computing device. Generally, program modules include routines, programs, objects, components, data structures, and so forth, which perform particular tasks or implement particular abstract data types. Aspects of the subject matter described herein may also be practiced in distributed computing environments where tasks are performed by remote processing devices that are linked through a communications network. In a distributed computing environment, program modules may be located in both local and remote computer storage media including memory storage devices.

Furthermore, although the term "dictation" or "voice-to-text" is interchangeably used herein, it will be recognized that these terms may similarly refer to services which may also encompass a server, a client, a set of one or more processes distributed on one or more computers, one or more stand-alone storage devices, a set of one or more other computing or storage devices, any application, process, or device capable of sending and/or receiving an audio stream comprising human dictation and converting the dictation into text.

As previously mentioned, embodiments of the present invention are generally directed to systems, devices, methods, and computer-readable storage media for initiating a system-based voice-to-text dictation service in response to recognizing a preconfigured gesture. A data input field, or an instance thereof, is presented and can be configured to receive user input data. In embodiments, the data input field is configured to at least detect one or more input events. A preconfigured gesture corresponding to the data input field is detected. In some embodiments, a gesture listener process is available throughout the system, regardless of the application, and is configured to detect the preconfigured gesture. An input event is generated based on the preconfigured gesture corresponding to the data input field. The input event is configured to invoke a voice-to-text session for the data input field. The preconfigured gesture includes a physical interaction between a user and a computing device. The interaction can begin within a gesture initiating region and end within a gesture terminating region. The voice-to-text session is invoked upon at least a recognition of the interaction. In some embodiments, the gesture initiating region does not include an on-screen affordance related to the voice-to-text session. On-screen affordances are generally known in the art as control user interfaces for the voice-to-text session.

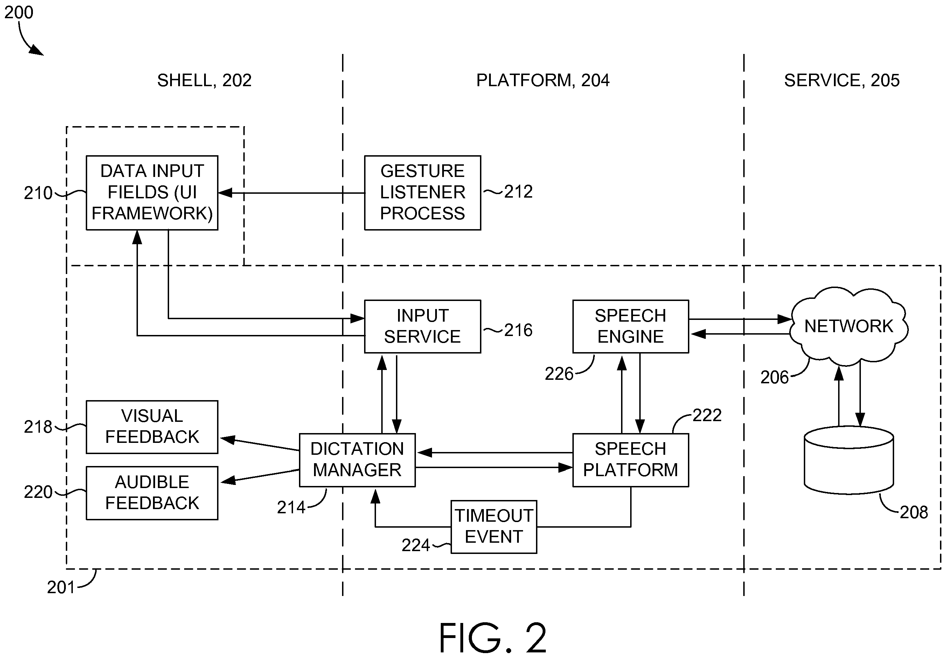

Referring now to FIG. 2, a block diagram is provided illustrating an exemplary operating system 200 including a system-wide dictation service 201 in which embodiments of the present invention may be employed. Generally, the computing system 200 illustrates an environment wherein preconfigured gestures corresponding to a data input field can be detected on a system-wide level and input events based on the preconfigured gesture are generated for invoking a voice-to-text session. Among other components not shown, the operating system 200 can generally include a dictation service 201 utilizing a shell component 202 (i.e., a user interface), a platform component 204 (i.e., a runtime environment or software framework), and a service component 205. The service component 205 can include a network component 206 (e.g., the Internet, a LAN), and a database component 208. The network component 206 can include, without limitation, one or more local area networks (LANs) and/or wide area networks (WANs). Such networking environments are commonplace in offices, enterprise-wide computer networks, intranets and the Internet. In some embodiments, the network component 206 is not necessary for operation of the computing system 200. Accordingly, the network 206 is not further described herein.

It should be understood that any number of computing devices necessary to facilitate the system-wide dictation service 201 can be employed in the operating system 200 within the scope of embodiments of the present invention. Each computing device can comprise a single device/interface or multiple devices/interfaces cooperating in a distributed environment. For instance, the dictation service 201 can comprise multiple devices and/or modules arranged in a distributed environment that collectively provide the functionality of the dictation service 201 described herein. Additionally, other components or modules not shown also may be included within the computing system.

In some embodiments, one or more of the illustrated components/modules may be implemented as stand-alone applications. In other embodiments, one or more of the illustrated components/modules may be implemented via a computing device, the dictation service 201, or as an Internet-based service. It will be understood by those of ordinary skill in the art that the components/modules illustrated in FIG. 2 are exemplary in nature and in number and should not be construed as limiting. Any number of components/modules may be employed to achieve the desired functionality within the scope of embodiments hereof. Further, components/modules may be located on and/or shared by any number of dictation services and/or user computing devices. By way of example only, the dictation service 201 might be provided as a single computing device, a cluster of computing devices, or a computing device remote from one or more of the remaining components. Additionally, components of the dictation service 201 may be provided by a single entity or multiple entities. For instance, a shell component 202 on one computing device could provide aspects of the dictation service 201 related to gesture detection while a second computing device (not shown) could provide the platform component 204. In another instance, one or more secondary or tertiary computing devices (not shown) could provide aspects of the service component 205. Any and all such variations are contemplated to be within the scope of embodiments herein.

It should be understood that this and other arrangements described herein are set forth only as examples. Other arrangements and elements (*e.g.*, machines, interfaces, functions, orders, and groupings of functions, etc.) can be used in addition to or instead of those shown, and some elements may be omitted altogether. Further, many of the elements described herein are functional entities that may be implemented as discrete or distributed components or in conjunction with other components, and in any suitable combination and location. Various functions described herein as being performed by one or more entities may be carried out by hardware, firmware, and/or software. For instance, various functions may be carried out by a processor executing instructions stored in memory.

The computing device can include any type of computing device, such as the computing device 100 described with reference to FIG. 1, for example. Generally, the computing device includes a display and is capable of displaying, scheduling, or initiating tasks or events from an electronic calendar or acting as a host for advertisements. The computing device is further configured to receive user input or selection based on advertisements that are presented to the user via the computing device. It should be noted that the functionality described herein as being performed by the computing device and/or dictation service 201 can be performed by any operating system, application, process, web browser, or via accessibility to an operating system, application, process, web browser, or any device otherwise capable of providing dictation services and/or data input field detection. It should further be noted that embodiments of the present invention are equally applicable to mobile computing devices and devices accepting touch, gesture, and/or voice input. Any and all such variations, and any combination thereof, are contemplated to be within the scope of embodiments of the present invention.

The dictation service 201 of FIG. 2 is configured to, among other things, provide a system-based voice-to-text dictation service in response to detecting a preconfigured gesture. As illustrated, in various embodiments, the dictation component 201 includes a shell component 202 and a platform component 204. The illustrated dictation service 201 also has access to a service component 205, including a network component 206 and a database component 208. The service component 205 may include a network 206 generally configured to provide a communication means for transferring signals, events, and data between computing devices utilized by the system 200. The database component 208 is a data store configured to maintain records and dictation interpretation data for one or more users. The data may be user-specific, such that the data store keeps records of the user's tendencies to dictate particular words or communicate using a particular style. The data store can also collect non-user-specific data, such that the data store maintains and "learns" dictation styles and vocabulary over an indefinite period of time. Further, though illustrated as one component, the database component 208 may, in fact, be a plurality of storage devices, for instance a database cluster, portions of which may reside in association with the dictation service 201, the computing device running the operating system 200, another external computing device (not shown), and/or any combination thereof.

The network component 206 is a network configured to facilitate communications between the computing device running the operating system 200 and the database component 208. The network component 206 can be the Internet, a local area network (LAN), or a wireless network. The service component 205, including the network component 206 and database component 208, may reside together or in multiple computing devices to provide a "cloud" service, as may be appreciated by one of ordinary skill in the art. At least a portion of the database component 208 may also reside on the computing device operating system 200 to allow voice-to-text conversion in circumstances where a network is inaccessible. Further, though illustrated as being apart from the operating system 200, the database component 208 may, in fact, be a part of the computing device running the operating system 200 including the dictation service 201.

The shell component 202 of the operating system 200, and utilized by the dictation service 201, is configured to identify events communicated to and from the user (i.e., a graphical user interface). The shell component 202 generally includes a user interface (UI) framework configured to render one or more data input fields 210. The data input fields 210 (e.g., a text box, a URL address box, a terminal prompt, a text message input area, a word processor input prompt, a search box, a calculator input prompt, etc.), or an instance thereof, can be presented to the user anywhere throughout the operating system including within applications and/or the shell user interface. In essence, the data input fields 210, rendered and configured by the UI frameworks, are operable to communicate with an input service 216, as will be described herein. The data input fields 210 also subscribe and/or listen to various input events (e.g., mouse events, keyboard events, gesture events, etc.) for performing subsequent actions therewith. With regards to detecting gesture events, the data input field(s) 210 can be notified of a gesture event, via the UI framework, by a gesture listener process 212 detecting a preconfigured gesture. As will be described herein, the gesture listener process 212 can detect a preconfigured dictation session "invocation" gesture corresponding to a data input field, ultimately invoking a dictation session for the corresponding data input field.

The dictation service 201 is in communication with the data input field(s) 210, such that upon detection of a preconfigured gesture corresponding to a data input field 210 by the gesture listener process 212, an input event (e.g., a gesture event) is generated by the gesture listener process 212 and sent to the data input field(s) 210 for handling. Though illustrated as being in direct communication with the gesture listener process 212, the data input fields 210 may, in fact, be in communication with any component or module of the operating system 200 or dictation service 201 configured to handle the input event generated by the gesture listener process 212.

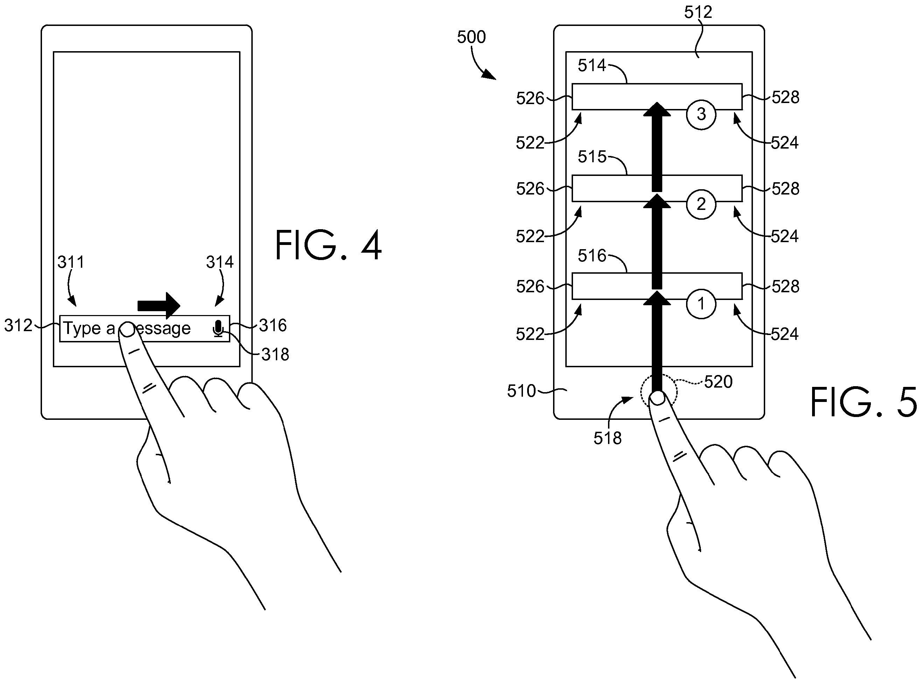

The gesture listener process 212, a component of the platform component 204 and utilized by the dictation service 201, is operable to invoke a voice-to-text session upon detecting a preconfigured gesture corresponding to a data input field. As will be described in FIGS. 4-7, a preconfigured gesture corresponding to a data input field includes a physical interaction between a user and a computing device, wherein the interaction begins within a gesture initiating region and ends within a gesture terminating region. In some embodiments, at least a portion of the interaction includes an area substantially defined by the data input field. The voice-to-text session is initiated upon at least a recognition or detection of the interaction. Although not illustrated, a speech listener process (not shown) may also be invoked upon initiation of the dictation manager 214. In such embodiments, the combination of a user performing or substantially performing a preconfigured gesture while dictating may be operable to initiate the voice-to-text session. Such a combination may be configured such that the preconfigured gesture must be completed before dictation, or in the alternative, the preconfigured gesture must be performed during the dictation, as will be described further herein.

The gesture listener process 212 is also configured to eliminate the need to include on-screen affordances (e.g., a microphone key on a virtual keyboard) to initiate the voice-to-text session. As can be appreciated by one of ordinary skill in the art, many computing devices utilizing touchscreen technologies require the use of virtual keyboards that appear when the user is prompted for input data. Virtual keyboards are generally cumbersome and utilize a great deal of screen real estate. Even so, the virtual keyboards are designed to provide input data only to the data input field after touching or selecting the data input field, followed by instantiating the virtual keyboard, and then typing via keyboard or initiating the voice-to-text session by means of the on-screen affordance. By eliminating the need to instantiate a virtual keyboard, and invoking a voice-to-text session by means of performing a gesture, the steps to providing dictation services are significantly reduced. Further, as will be described, gestures may be configured to allow the user to choose which data input field will receive the dictation input data, simply by configuring the gesture terminating region to be located substantially within the physical boundaries of the desired data input field.

The gesture listener process 212, upon recognizing a preconfigured gesture corresponding to a data input field 210 and sometimes, with speech, can send a signal or input event to the corresponding data input field 210. The corresponding data input field 210 is configured to send the signal or input event to an input service 216. The input service 216, a subcomponent of the platform component 204, is configured to recognize all data input fields 210 in the system and handle input events delivered there through. In turn, the input service 216 communicates the signal or input event to the dictation manager 214, the dictation manager 214 being configured to manage the processes and flow of the dictation service 201. The dictation manager 214 facilitates communication between shell component 202 and platform component 204, and is responsible for managing the input and output of the dictation service 201. As such, upon receiving an indication from one or more data input fields 210 that a preconfigured gesture corresponding therewith has been detected, by way of an input event being communicated there through, the dictation manager 214 is operable to provide a voice-to-text session for entering converted voice-to-text input data to the corresponding data input field. The basic functionalities of a dictation service providing a voice-to-text session are generally known in the art; however, description of the basic components will be described further herein.

The dictation manager 214, upon initiating the voice-to-text session, includes at least shell component 202 modules and/or functions and platform component 204 modules and/or functions. As described, the data input field(s) 210 are shell components that are in communication with the input service 216, which in turn, are in communication with the dictation manager 214. The data input field(s) are configured, among other things, to receive and present converted dictation data (e.g., voice-to-text data) therein, the data provided by the speech platform 222 which will be described further herein. The speech platform 222 provides converted dictation data to the dictation manager 214, the dictation manager 214 then storing the converted dictation data to an edit buffer (not shown) managed by the input service 216. As such, the converted dictation data is sent to and presented by the corresponding data input field 210 by way of the input service 216, as illustrated.

Shell component 202 functionalities provided by the dictation manager 214 also include visual feedback 218 and audible feedback 220. Visual feedback 218 functionality can include gesture recognition status, dictation start/stop prompts, transient on-screen affordances for initiating a voice-to-text session, on-screen affordances for terminating a voice-to-text session, etc. In other words, the visual feedback 218 provided by the dictation manager 214 can generally provide dictation service 201 status indicators and control inputs to the user. Audible feedback 220 functionality can similarly include gesture recognition status, dictation prompts, dictation feedback, etc. Audible feedback 220, as provided by the dictation manager 214 can generally provide dictation service 201 status indicators to the user.

As briefly mentioned above, the dictation manager 214 is in communication with a speech platform 222, which generally comprises an operating environment and runtime libraries specifically directed to providing voice-to-text functionality in the dictation service 201. The speech platform 222 provides the dictation manager 214 with an interface to a speech engine 226 after receiving a signal or notification from the dictation manager 214 that the voice-to-text session is to be invoked. The speech platform 222 is also operable to determine dictation status. For example, if a user finishes a dictation with a silent pause, the speech platform may provide functionality to determine a timeout event 224 and communicates the timeout event 224 to the dictation manager for action. The speech platform 222 is also in communication with the speech engine 226, the speech engine 226 being comprised of software for providing voice-to-text conversion.

The speech engine 226, which interfaces with the speech platform 222 for communication with the dictation manager 214, is configured to provide the speech recognition technology necessary to facilitate the voice-to-text conversion. As illustrated, the speech engine 226 is in communication with the service component 205, including an external network 206 and database 208. As described above, the service component 205 may be configured as a cloud service configured to provide voice-to-text conversion data. Though illustrated with the speech engine 226 as being part of the computing device platform 204, the speech engine 226 may alternatively be configured as being a part of the cloud service, such that the speech platform 222 is in communication with the speech engine 226 via the network 226. In the alternative, the speech engine may not necessarily need to communicate with the network 206 and database 208 for enabling dictation services. The speech engine 226 may therefore be configured to provide voice-to-text conversion data on the local computing device alone.

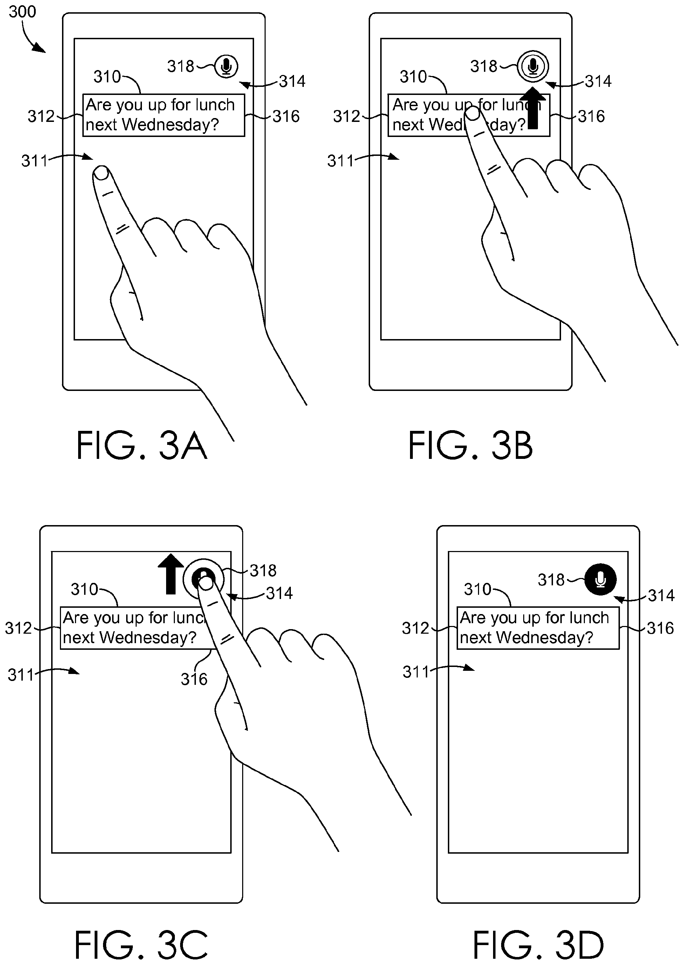

Referring now to FIGS. 3A-3D, stages of an exemplary preconfigured gesture for starting a voice-to-text session are provided, particularly illustrating a swipe in data input field sequence 300. In the swipe in data input field sequence 300, the preconfigured gesture includes a data input field 310 having a gesture initiating region 311 located near a first end 312 of the data input field and a gesture terminating region 314 located near a second end 316 of the data input field. The preconfigured gesture requires a continuous and fluid physical interaction between the gesture initiating region 311 and the gesture terminating region 314, the interaction being between the user and the touchscreen of the computing device. In the illustrated embodiment, a transient floating microphone icon 318 is displayed. In embodiments, the icon only reveals itself as the gesture is being performed. In some aspects, the icon can appear offset from the gesture terminating region 314, such that a completion of the gesture sequence 300 is required before a next step of continuously and fluidly continuing the gesture to the icon 318 will initiate the voice-to-text session. In some other aspects, as illustrated in FIG. 4, the icon 318 can alternatively be fixed within the terminating region 314, such that a swipe from the gesture initiating region 311 to the gesture terminating region 314, where the icon 318 is fixed, would indicate the desire to initiate the voice-to-text session.

Referring now to FIG. 5, an exemplary preconfigured gesture for starting a voice-to-text session is provided, particularly illustrating a swipe from bezel to data input field sequence 500. In the swipe from bezel to data input field sequence 500, the user is presented with a touchscreen computing device presenting a bezel 510 being seamless with the touchscreen display 512. The display 512 presents at least one data input field 514,515,516 operable to receive input data. The bezel presents a gesture initiating region 518 located substantially atop the bezel area 510, preferably near a capacitive home button 520 or variation thereof. The preconfigured gesture requires a continuous and fluid physical interaction between the gesture initiating region 518 and a gesture terminating region, the gesture terminating region being a data input field 514,515,516, or any area located between a first 526 and second end 528 of the data input field 514,515,516. In some aspects, the preconfigured gesture can communicate to the dictation service which data input field, among a plurality of data input fields, are desired for voice-to-text input by detecting which data input field is selected as the gesture terminating region. In some further aspects, if a data input field is already in focus, the preconfigured gesture terminating region can be configured to be any distance from the bezel, on the touchscreen display. In some embodiments, a quick sliding touch from the bezel gesture initiating region onto an edge of the active touchscreen display could initiate a voice-to-text session. In other embodiments, the same sliding touch extended from zero to about one-inch from the bezel can initiate the voice-to-text session.

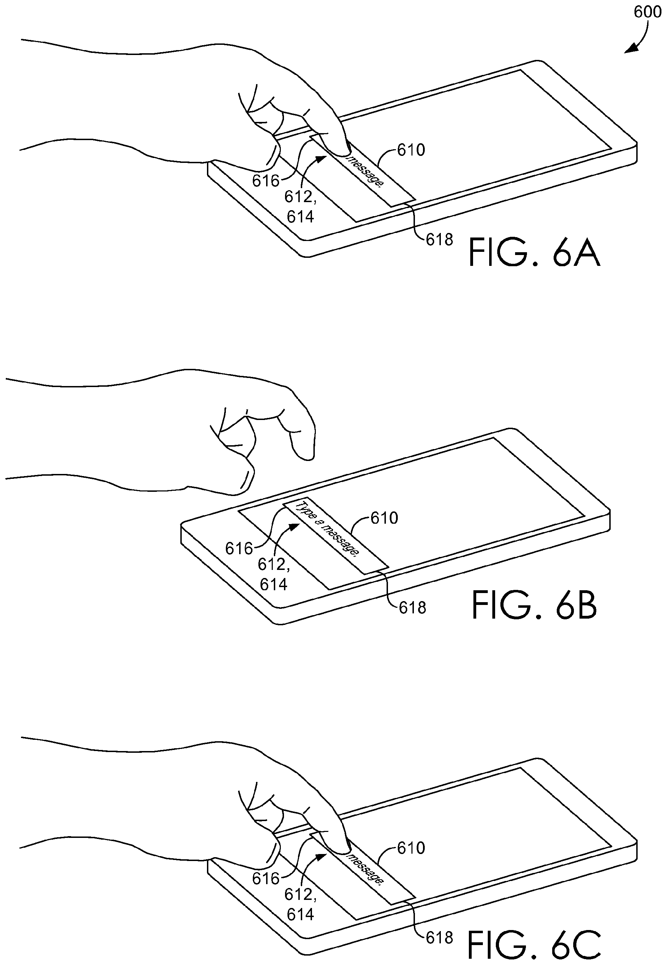

Referring now to FIGS. 6A-C, stages of an exemplary preconfigured gesture for starting the voice-to-text session is provided, particularly illustrating the double tap in data input field sequence 600. As one skilled in the art may appreciate, a double tap is generally two consecutive interactions or "taps" from a user to a touchscreen computing device for invoking a process. As can also be appreciated, the pause between two consecutive taps is generally brief (i.e., 0.1 to 0.8 seconds) but reasonable, and can sometimes be configured by system settings. In the double tap in data input field sequence 600, the preconfigured gesture includes a data input field 610 having a common or partially common gesture initiating region 612 and gesture terminating region 614. Both the initiating and terminating regions 612,614 are located between first 616 and second ends 618 of the data input field 610. In some aspects, the gesture terminating region 614 is determined after the user briefly taps the initiating region 612. In some other aspects, the operating system can be configured to provide a system-wide recognition of double taps, such that the recognition of a double tap within a data input field would initiate the voice-to-text session. The preconfigured gesture requires two quick and consecutive or contiguous touchings or tappings of the initiating and terminating regions 612,614 for initiating the voice-to-text session.

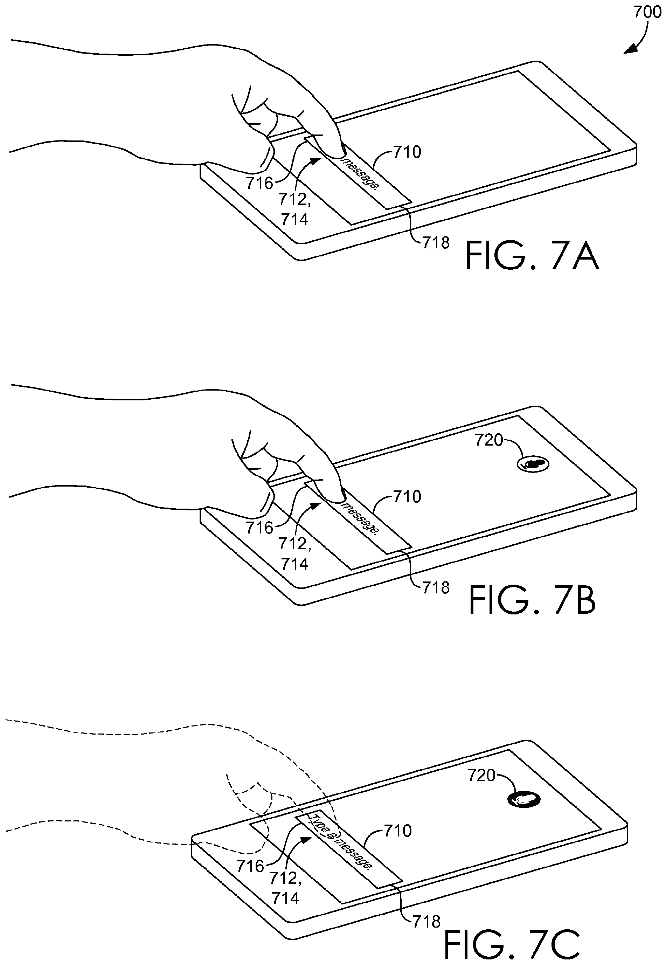

Referring now to FIGS. 7A-7C, stages of an exemplary preconfigured gesture for starting the voice-to-text session is provided, particularly illustrating the push and hold sequence 700. In the push and hold sequence 700, the preconfigured gesture includes a data input field 710 having a common or partially common gesture initiating region 712 and gesture terminating region 714, with both regions 712,714 being located between first 716 and second 718 ends of the data input field 710. The push and hold sequence 700 can be analogized to a push-to-talk scenario, where a constant depression of the common or partially common gesture regions 712,714 up to a predetermined time limit will initiate a voice-to-text session. In some aspects, the gesture will require constant depression or contact on the common or partially common gesture regions 712,714 while dictation is performed, as illustrated by the assumed continued depression portrayed in FIG. 7C. In other words, the voice-to-text session will only be active while the gesture regions 712,714 are being activated by the interaction. In some other aspects, the constant depression or interaction of the common or partially common gesture regions 712,714 up to a predetermined time will initiate the voice-to-talk session, wherein once activated, the user can discontinue the depression or interaction and proceed with the dictation. In such aspects, a timeout event, such as a predefined period of silence following a user dictation, may terminate the voice-to-text session. In some other aspects, an on-screen affordance or visual indicator 720 can be presented upon a gesture leading to an impending activation or the actual activation of the voice-to-text session. Other aspects may detect a keystroke performed on an actual or virtual keyboard, a removal of focus away from the active data input field, or a voice command (e.g., the user says "stop listening").

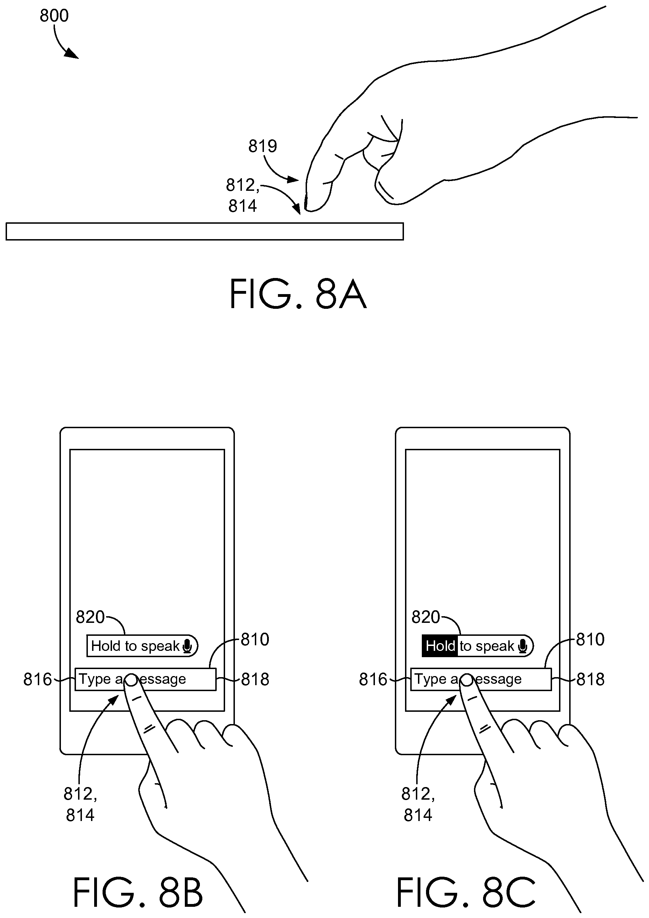

Referring now to FIGS. 8A-8C, an exemplary preconfigured gesture for starting the voice-to-text session is provided, particularly illustrating the hover over data input field sequence 800. In the hover over data input field sequence 800, the preconfigured gesture includes a data input field 810 having a common or partially common gesture initiating region 812 and gesture terminating region 814. Both the initiating and terminating regions 812,814 are located between first 816 and second ends 818 of the data input field 810. In some aspects, the gesture terminating region 814 is determined after the user hovers 819 over the initiating region 812 over a predetermined period of time. As such, the hovering of the user's interaction device (e.g., finger or stylus) over the data input field 810 for a predetermined period of time may initiate the voice-to-text session. In some aspects, as the user hovers over the initiating region 812, an on-screen affordance or visual indicator 820 can be presented for providing the user with feedback on an impending activation or the actual activation of the voice-to-text session.

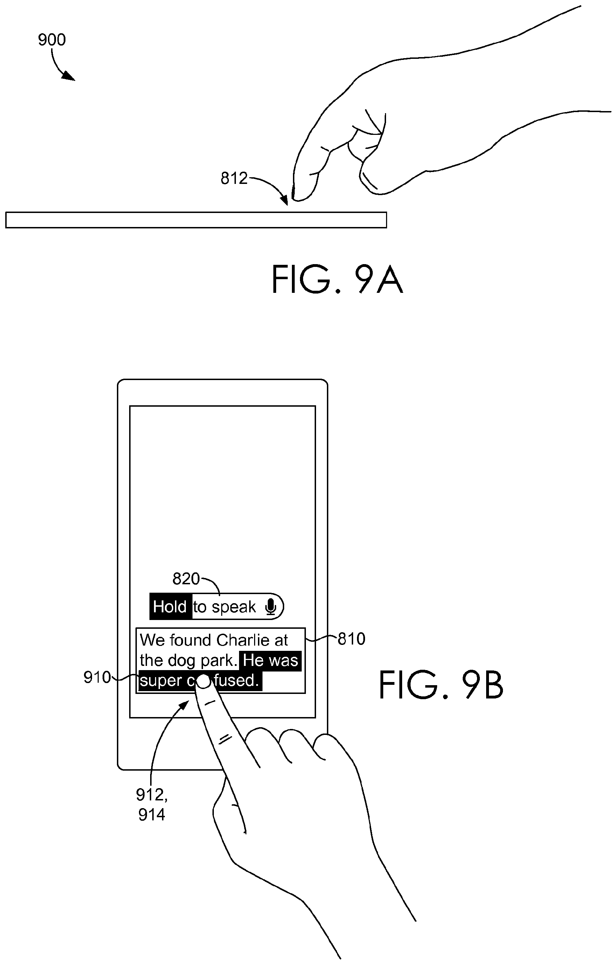

Referring now to FIGS. 9A-9B, similar to that of FIGS. 8A-8C, an exemplary preconfigured gesture for starting a voice-to-text session is provided using the hover over data input field sequence 800. To distinguish the illustrated gestures from that of FIGS. 8A-8C, the exemplary preconfigured gesture 900 is directed to starting a voice-to-text session for overwriting selected data in the data input field utilizing the hover over data input field sequence 800. Instead of simply hovering over the data input field 810, the user will have previously selected preexisting input data 910 in the data input field 810. As such, in embodiments, the gesture initiating region 912 and gesture terminating region 914 are located within the boundaries defined by the selected preexisting input data 910.

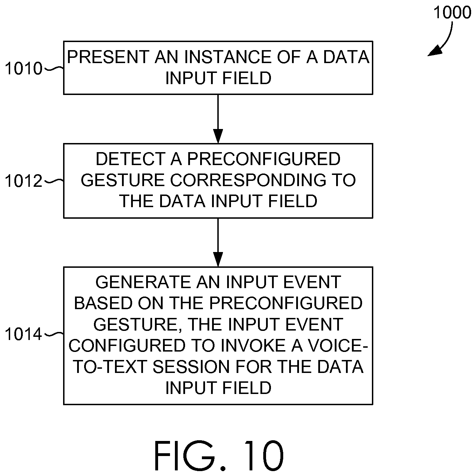

Referring now to FIG. 10, a flow diagram is provided that illustrates a method 1000 for initiating a system-wide voice-to-text dictation service in response to a preconfigured gesture. As shown at step 1010, a data input field, or an instance thereof, is presented and configured to at least detect one or more input events. The data input field can be any input field that is capable of receiving input from a user (e.g., a text box, a URL address bar, a search bar, a calculator input prompt, a text message input prompt, a telephone number prompt, an email message input prompt, etc.).

At least while the data input field is presented, a gesture listener process is running. The gesture listener process, which can be available system-wide, is configured to detect a preconfigured gesture corresponding to the data input field, as shown at step 1012.. A preconfigured gesture can include any physical interaction between a user and a computing device (e.g., a touch, slide, hover, swipe, tap, etc.). Generally, such a physical interaction begins within a gesture initiating region and ends within a gesture terminating region, wherein upon recognition of the process of performing the preconfigured gesture, or the actual completion thereof, invokes a voice-to-text session. In some aspects, the substantial performance or actual performance of the preconfigured gesture may also require the detection of speech to invoke the voice-to-text session. The detection of the preconfigured gesture corresponding to the data input field, and in some embodiments in combination with the detection of speech, generates an input event, as shown at step 1014. The input event is configured to invoke a voice-to-text session for the data input field.

In some aspects, the gesture initiating region does not include any on-screen affordances or controls related to initiating a voice-to-text session. In some other aspects, an on-screen affordance may be transient, such that the on-screen affordance to initiate the voice-to-text session becomes visible and may be interacted with upon substantial or actual performance of the preconfigured gesture.

As can be understood, embodiments of the present invention can provide methods of aborting voice-to-text sessions. For example, voice-to-text sessions can be aborted after a predetermined period of silence (e.g., 5 seconds of silence following dictation). Further, voice-to-text sessions can be aborted through an interaction with a transient on-screen affordance, which only appears after the substantial or actual performance of a preconfigured gesture. Other embodiments can provide methods to abort voice-to-text session by detecting: a keystroke performed on an actual or virtual keyboard, a removal of focus away from the active data input field, or a voice command (e.g., the user says "stop listening"). Finally, in embodiments that require the continual performance of the preconfigured gesture during dictation (i.e., the push-to-talk embodiment as described herein), a termination of performance of the preconfigured gesture can abort the voice-to-text session.

The present invention has been described in relation to particular embodiments, which are intended in all respects to be illustrative rather than restrictive. Alternative embodiments will become apparent to those of ordinary skill in the art to which the present invention pertains without departing from its scope.

While the invention is susceptible to various modifications and alternative constructions, certain illustrated embodiments thereof are shown in the drawings and have been described above in detail. It should be understood, however, that there is no intention to limit the invention to the specific forms disclosed, but on the contrary, the intention is to cover all modifications, alternative constructions, and equivalents falling within the scope of the claims.

## Claims

1. A method of invoking voice-to-text sessions on a computing device having a display comprising:
presenting (1010) an instance of a data input field (310) on the display;
detecting (1012) a preconfigured gesture corresponding to the data input field (310); and
generating (1014) an input event based on the preconfigured gesture corresponding to the data input field (310), the input event configured to invoke a voice-to-text session for the data input field (310),
**characterized in that**
the preconfigured gesture comprises a first part of a swipe which requires a continuous and fluid physical interaction between a gesture initiating region (311) near a first end of the data input field (310) and a gesture terminating region (314) near a second end of the data input field (310) and causes an on-screen affordance (318) related to the voice-to-text session for the data input field to appear offset from the gesture terminating region (314), and a second part of the swipe which is fluidly continued from the first part of the swipe to the on-screen affordance (318) and initiates the voice-to-text session for the data input field (310).

2. The method of claim 1, wherein the gesture initiating region (311) does not comprise an on-screen affordance related to the voice-to-text session, the on-screen affordance being a voice-to-text session control interface.

3. The method of claim 1, wherein the voice-to-text session is further invoked upon a detection of speech.

4. The method of claim 1, wherein the voice-to-text session is aborted upon one of a timeout event, an interaction with the on-screen affordance (318), or a keyboard keystroke.

5. The method of claim 1, wherein the voice-to-text session is aborted upon one of a removal of focus away from the data input field, a voice command, or a termination of the preconfigured gesture.

6. The method of claim 4, wherein the on-screen affordance (318) is only available for interaction after start of the voice-to-text session.

7. The method of claim 1, wherein the detecting is only performed upon determining the presence of the data input field (310) on the display, the data input field (310) configured to receive user input data.

8. A computer storage media storing computer-executable instructions that, when executed by a computing device, perform operations that carry out the method of one of claims 1 to 7.

9. A computing device having a processor coupled with computer-executable instructions that, when executed by the computing device, perform operations that carry out the method of one of claims 1 to 7.

10. A system (200) comprising:
a shell component (202) configured to provide a user interface, and a platform component (204) configured to provide a runtime environment or software framework, the components being implemented by a computing device according to claim 9;
a network component (206); and
a database component (208) connected via the network component (206) to the platform component (204).

## Patentansprüche

1. Verfahren zum Aufrufen von Sprache-zu-Text-Sitzungen auf einer Computervorrichtung mit einer Anzeige, umfassend:
Präsentieren (1010) einer Instanz eines Dateneingabefelds (310) auf der Anzeige;
Erkennen (1012) einer mit dem Dateneingabefeld (310) korrespondierenden, vordefinierten Geste; und
Erzeugen (1014) eines Eingabeereignisses auf der Grundlage der mit dem Dateneingabefeld (310) korrespondierenden, vorkonfigurierten Geste, wobei das Eingabeereignis zum Aufrufen einer Sprache-zu-Text-Sitzung für das Dateneingabefeld (310) ausgelegt ist,
**dadurch gekennzeichnet, dass**
die vordefinierte Geste einen ersten Teil eines Wischens, das eine kontinuierliche und fließende physikalische Interaktion zwischen einer gesteneinleitenden Region (311) nahe einem ersten Ende des Dateneingabefelds (310) und einer gestenabschließenden Region (314) nahe einem zweiten Ende des Dateneingabefelds (310) erfordert und bewirkt, dass eine sich auf die Sprache-zu-Text Sitzung für das Dateneingabefeld beziehende Bildschirmaffordanz (318) versetzt zur gestenabschließenden Region (314) erscheint, und einen zweiten Teil eines Wischens umfasst, das fließend vom ersten Teil des Wischens zur Bildschirmaffordanz (318) fortgesetzt wird und die Sprache-zu-Text-Sitzung für das Dateneingabefeld (310) einleitet.

2. Verfahren nach Anspruch 1, wobei die gesteneinleitende Region (311) keine mit der Sprache-zu-Text-Sitzung in Bezug stehende Bildschirmaffordanz umfasst, wobei die Bildschirmaffordanz eine Steuerschnittstelle für die Sprache-zu-Text-Sitzung ist.

3. Verfahren nach Anspruch 1, wobei die Sprache-zu-Text-Sitzung ferner nach Erkennung von Sprache aufgerufen wird.

4. Verfahren nach Anspruch 1, wobei die Sprache-zu-Text-Sitzung nach einem von einem Zeitüberschreitungsereignis, einer Interaktion mit der Bildschirmaffordanz (318) oder einem Tastaturanschlag der Tastatur abgebrochen wird.

5. Verfahren nach Anspruch 1, wobei die Sprache-zu-Text-Sitzung nach einem von einem Entfernen des Blicks vom Dateneingabefeld, einem Sprachbefehl oder einer Beendigung der vordefinierten Geste abgebrochen wird.

6. Verfahren nach Anspruch 4, wobei die Bildschirmaffordanz (318) nur nach Beginn der Sprache-zu-Text-Sitzung für eine Interaktion zur Verfügung steht.

7. Verfahren nach Anspruch 1, wobei das Erkennen nur nach Bestimmen der Präsenz des Dateneingabefelds (310) auf der Anzeige durchgeführt wird, wobei das Dateneingabefeld (310) zum Empfangen von Benutzereingabedaten ausgelegt ist.

8. Computerspeichermedium zum Speichern von computerausführbaren Anweisungen, die beim Ausführen durch eine Computervorrichtung Vorgänge durchführen, die das Verfahren nach einem der Ansprüche 1 bis 7 ausführen.

9. Computervorrichtung mit einem Prozessor, der mit computerausführbaren Anweisungen gekoppelt ist, die beim Ausführen durch die Computervorrichtung Vorgänge durchführen, die das Verfahren nach einem der Ansprüche 1 bis 9 ausführen.

10. System (200), umfassend:
eine Shell-Komponente (202), die zum Bereitstellen einer Benutzeroberfläche ausgelegt ist, und eine Plattform-Komponente (204), die zum Bereitstellen einer Laufzeitumgebung oder eines Software-Frameworks ausgelegt ist, wobei die Komponenten von einer Computervorrichtung nach Anspruch 9 implementiert sind;
eine Netzwerk-Komponente (206); und
eine Datenbank-Komponente (208), die über die Netzwerk-Komponente (206) mit der Plattform-Komponente (204) verbunden ist.

## Revendications

1. Procédé d'appel de sessions « voix-texte » sur un dispositif informatique présentant un écran d'affichage, comprenant les étapes ci-dessous consistant à :
présenter (1010) une instance d'un champ d'entrée de données (310) sur l'écran d'affichage ;
détecter (1012) un geste préconfiguré correspondant au champ d'entrée de données (310) ; et
générer (1014) un événement d'entrée basé sur le geste préconfiguré correspondant au champ d'entrée de données (310), l'événement d'entrée étant configuré de manière à appeler une session « voix-texte » pour le champ d'entrée de données (310) ;
**caractérisé en ce que :**
le geste préconfiguré comprend une première partie d'un balayage qui nécessite une interaction physique continue et fluide entre une zone d'initiation de geste (311) à proximité d'une première extrémité du champ d'entrée de données (310), et une zone de terminaison de geste (314) à proximité d'une seconde extrémité du champ d'entrée de données (310), et occasionne une affordance d'action à l'écran (318) connexe à la session « voix-texte » afin que le champ d'entrée de données paraisse décalé de la zone de terminaison de geste (314), et comprend une seconde partie du balayage qui se poursuit de manière fluide de la première partie du balayage à l'affordance d'action à l'écran (318), et initie la session « voix-texte » pour le champ d'entrée de données (310).

2. Procédé selon la revendication 1, dans lequel la zone d'initiation de geste (311) ne comprend pas d'affordance d'action à l'écran connexe à la session « voix-texte », l'affordance d'action à l'écran correspondant à une interface de commande de session « voix-texte ».

3. Procédé selon la revendication 1, dans lequel la session « voix-texte » est en outre appelée lors d'une détection de parole.

4. Procédé selon la revendication 1, dans lequel la session « voix-texte » est interrompue suite à l'un des éléments parmi un événement de fin de temporisation, une interaction avec l'affordance d'action à l'écran (318), ou une frappe de clavier.

5. Procédé selon la revendication 1, dans lequel la session « voix-texte » est interrompue suite à l'un des éléments parmi une suppression de focalisation hors du champ d'entrée de données, une commande vocale ou une fin du geste préconfiguré.

6. Procédé selon la revendication 4, dans lequel l'affordance d'action à l'écran (318) n'est disponible pour l'interaction qu'après le début de la session « voix-texte ».

7. Procédé selon la revendication 1, dans lequel l'étape de détection n'est mise en oeuvre qu'après détermination de la présence du champ d'entrée de données (310) sur l'écran d'affichage, le champ d'entrée de données (310) étant configuré de manière à recevoir des données d'entrée utilisateur.

8. Support de stockage informatique stockant des instructions exécutables par ordinateur qui, lorsqu'elles sont exécutées par un dispositif informatique, mettent en oeuvre des opérations qui exécutent le procédé selon l'une des revendications 1 à 7.

9. Dispositif informatique présentant un processeur couplé à des instructions exécutables par ordinateur qui, lorsqu'elles sont exécutées par le dispositif informatique, mettent en oeuvre des opérations qui exécutent le procédé selon l'une des revendications 1 à 7.

10. Système (200) comprenant:
un composant d'enveloppe (202) configuré de manière à fournir une interface utilisateur, et un composant de plate-forme (204) configuré de manière à fournir un environnement d'exécution ou un cadriciel, les composants étant mis en œuvre par un dispositif informatique selon la revendication 9 ;
un composant de réseau (206) ; et
un composant de base de données (208) connecté par l'intermédiaire du composant de réseau (206) au composant de plate-forme (204).
